Europäisches Patentamt

European Patent Office

Office européen des brevets

(11) Veröffentlichungsnummer: **0 158 994**

**A2**

(12) **EUROPÄISCHE PATENTANMELDUNG**

(21) Anmeldenummer: **85104484.2**

(22) Anmeldetag: **12.04.85**

(51) Int. Cl.⁴: **G 06 K 7/10**

(30) Priorität: **16.04.84 CH 1903/84**

(43) Veröffentlichungstag der Anmeldung:
**23.10.85 Patentblatt 85/43**

(84) Benannte Vertragsstaaten:
**AT BE CH DE FR GB IT LI LU NL SE**

(71) Anmelder: **U.P.I. International Inc.**
**Valley House Hirzel Street St. Peter Port**
**Guernsey Channel Islands(GB)**

(72) Erfinder: **Eichholz, Helge**
**Entenfangweg 10**
**D-3000 Hannover 21(DE)**

(74) Vertreter: **Punschke und Frei Patentanwälte**
**Hedwigsteig 6 Postfach 95**
**CH-8029 Zürich(CH)**

(54) **Optische Leseeinrichtung zum Lesen von auf Druck- oder Schreibträgern aufgebrachten graphischen Zeichen.**

(57) Eine Ausführungsformen der Erfindung ist eine optische Leseeinrichtung mit einer Mehrzahl von Lichtleitern, die zu einem Bündel zusammengefasst sind und das eine Ende des Bündels leseseitig in eine relative Lesebewegung zu den graphischen Zeichen bringbar ist und das andere Ende des Bündels mit einem optischen Rezeptor verbunden ist. Die einzelnen Lichtleiter des Bündels können leseseitig zu einer Matrix geordnet sein und am anderen Ende des Bündels einen optischen Rezeptor aufweisen.

FIG. 1

EP 0 158 994 A2

Croydon Printing Company Ltd.

BE20858, U.P.I. INTERNATIONAL INC.

OPTISCHE LESEEINRICHTUNG ZUM LESEN VON AUF DRUCK- ODER
SCHREIBTRÄGER AUFGEBRACHTEN GRAPHISCHEN ZEICHEN.

Die Erfindung liegt im Gebiet der optischen Bilderfassung
und betrifft eine Leseeinrichtung gemäss Oberbegriff von
Patentanspruch 1.

Die optische Bilderfassung im weiteren und die optischen
Leseeinrichtungen im engeren Sinne haben, von einer gemeinsamen Problemstellung her betrachtet, die Aufgabe ein Bildmuster, das können farbige Vorlagen oder solche mit lediglich verschiedenen Grauabstufungen als Bilder oder aber
Zeichen einer Schriftsprache mit nur zwei Farbstufungen
(schwarz/weiss) sein, abzubilden, aufzulösen, umzusetzen und
wieder zu rekonstruieren. Beim klassischen Vorgehen sind die
optischen Mittel für die Abbildung Linsen aus lichtbrechenden Materialien, meist deren mehrere zu einem optischen
System vereinigt, welches optische System das Bild auf ein
sogenanntes Rasterfeld aus photosensitiven Elementen abbildet. Ueber diese photosensitiven Elemente wird das "Gesamtbild" aufgelöst und elektrisch umgesetzt. Der Rest ist Aufgabe von bspw. computerresidenter Intelligenz, wie Bildauf-

BE20858, U.P.I. INTERNATIONAL INC.


bereitung,   Bildergänzung  mittels  mathematischen  Filtern
bspw. von Hadamard etc.


Das  mechanisierte  Ablesen  von  Vorlagen,  wie  es  bspw.  bei
Beleglesern  oder  Telekopierern  der  Fall  ist,  verlangt  von
der  Problemstellung  her  verschiedenen  Aufwand:  es  ist  nicht
derselbe   technische  Schwierigkeitsgrad,  ob  ein   Strichcode
oder   die   Unterschrift  auf  eienem  Check  mechanisch  gelesen
und   adäquat  ausgewertet  werden  soll.  Eigentümlicherweise
werden   für  die  Abbildung  aber  fast  ausnahmslos  die  üblichen
vorhandenen   optischen  Mittel  verwendet,  Linsen  aus  lichtbrechenden  Materialien,  bis  hin  zu  den  ausgeklügelsten  optischen   Systemen,   wobei  dieser  Aufwand  nicht  in  jedem  Fall
gerechtfertigt ist.


Dazu  kommt,  dass  für  die  zum  Lesen  unverzichtbare  Relativbewegung   zwischen  Zeichen  und  Abbildungsystem,   das  wäre   der
Lesevorschub,  jeweils  spezielle  mechanische  Systeme  entwickelt  werden.  Dies  führt  zu  erfahrungsgemäss  teuren  Lesegeräten,  die  mitunter  wohl  viel  bieten,  aber  fast  allesamt
in  einem  ganz  beachtlichen  Preisniveau  liegen  und  zwar  derart,  dass  das  Lesegerät  oft  das  teuerste  Stück  der  ganzen
Anlage einschliesslich Computer ist.


Es  ist  daher  Aufgabe  der  Erfindung,  eine  wesentlich  vereinfachte  Leseeinrichtung  zu  schaffen,  die  damit  preisgünstig
wird  und  trotzdem  die  Leistungsfähigkeit  von  mehrfach  teureren  Geräten  aufweist.  Eine  besondere  Ausführungsform  soll
ein  voll  schriftlesetaugliches  Zusatzgerät  zur  Integration
in bestehenden Anlagen ohne Leseeinrichtung sein.

0158994

BE20858, U.P.I. INTERNATIONAL INC.

Diese Aufgabe wird durch die in den Patentansprüchen definierte Erfindung gelöst.

Ausführungsformen der Erfindung werden nun anhand der nachfolgend aufgeführten Zeichnungen eingehend diskutiert. Es
zeigen:

Figur 1 die Prinzipdarstellung eines Lesekopfs der
Leseeinrichtung;

Figur 2 eine abgewandelte Ausführungsform des Lesekopfs
gemäss Figur 1 in frontaler Ansicht;

Figur 3 eine andere abgewandelte Ausführungsformdes Lesekopfs gemäss Figur 1 in frontaler Ansicht;

Figur 4 die Darstellung eines zu ergänzenden Charakters;

Figur 5 ein Lesegerät gemäss Erfindung, in welchem ein
Drucker als Vehikel benutzt wird;

Figur 6 ein Detail aus der Darstellung von Figur 5

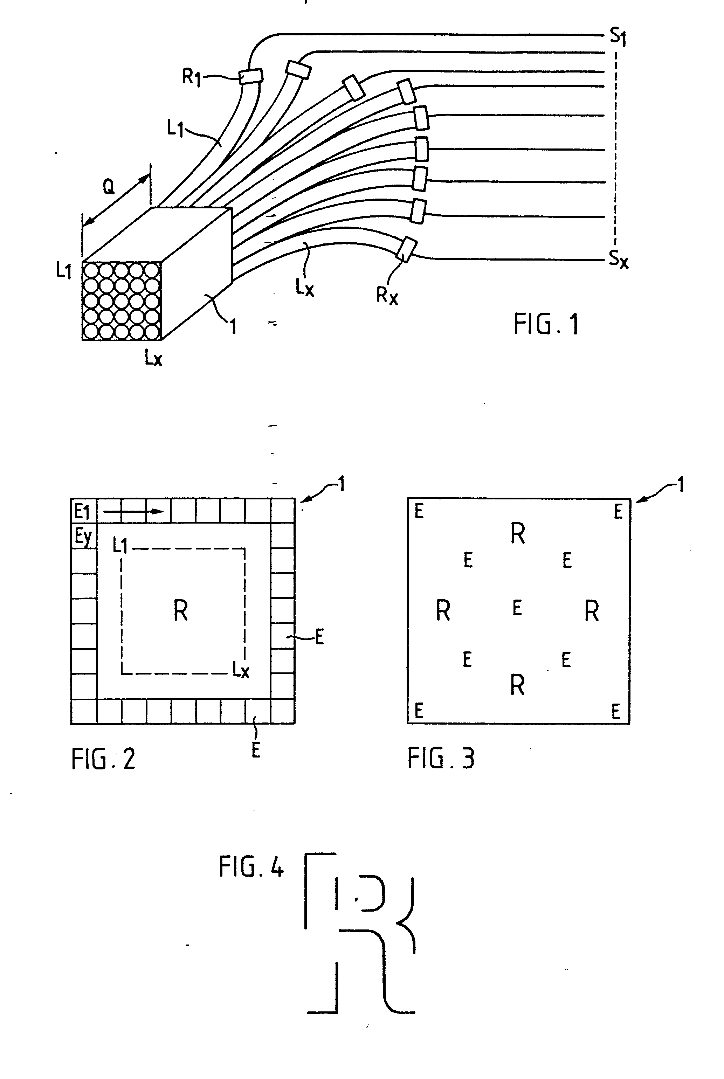

Die Prinzipdarstellung nach Figur 1 zeigt ein Lichtleiterbündel 1 aus einer Anzahl x optischen Fibern L1 bis Lx
bestehend. Am einen Ende ist das Bündel 1 zu einer Matrix
L1/Lx geordnet und auch so fixiert, am andern Ende ist das
Bündel 1 mit den Lichtleitern L1 bis Lx aufgefächert und an
Rezeptoren R1 bis Rx angeschlossen. Von den Rezeptoren führen Signalleitungen S1 bis Sx die umgesetzten Bildsignale in
eine Auswertevorrichtung, üblicherweise auf einen Computer.
Die Länge Q des Bündels 1 ist beliebig; dabei soll klar
sein, dass trotz der "quadratischen" Darstellung dass Bündel

BE20858, U.P.I. INTERNATIONAL INC.

ein flexibler Strang sein kann. Die Matrix soll eine für eine adäquate Auflösung der Bildvorlage nötige Anzahl Lichtleiter aufweisen. Als Lichtleiter eignen sich besonders Gradientenfasern aus Kunstharz, die sich als Bündel sauber schneiden lassen, kritisch ist jedoch, wie sich gezeigt hat, der Schnitt des Bündels zur Erzielung einer Matrixfläche nicht. Das Lichtleiterbündel muss auch nicht "streng" zu einer Matrix geordnet sein, da die Abbildung nach bekannten Vorgehen auch elektronisch geordnet werden kann. All dies kommt einer ausserordentlich kostengünstigen Herstellung entgegen, da das ganze optische Abbildungssystem lediglich aus der Stirnfläche einer gebündelten Anordnung von Lichtleiter-Fasern und dem zugehörigen Strang besteht.

Es hat sich nämlich gezeigt, dass bei geringem Abstand der Stirnfläche von einem normal zum Untergrund kontrastierenden Zeichenmuster, dieses einwandfrei abgebildet die Rezeptoren erreicht und anschliessend mittels künstlicher Intelligenz jegliches brauchbare Handling möglich ist. Ein mit der zu lesenden Unterlage berührungsfreier Vorschub ermöglicht die Verwendung der optimalen optischen Materialien, da ein Kompromiss für mechanische Stabilität oder für Verschleissfestigkeit dahinfällt. Wie Optikfasern mit Rezeptoren oder Emittoren verbunden werden, ist allenthalben bekannt.

Entsprechende Versuche haben weiterhin gezeigt, dass eine Normalbeleuchtung völlig ausreichend ist, um einen sozusagen passiven, lediglich aus Lesefasern bestehenden Lesekopf zu befeuern. Missliche Lichtverhältnisse können leicht durch das Anbringen einer Lampe über der Lesevorlage behoben werden. Trotzdem sieht eine Ausführungsform der Erfindung einen Lesekopf mit sozusagen aktiven Beleuchtungsfasern vor, durch welche Licht in die unmittelbare Nähe des zu lesenden Zeichens emittiert wird.

BE20858, U.P.I. INTERNATIONAL INC.


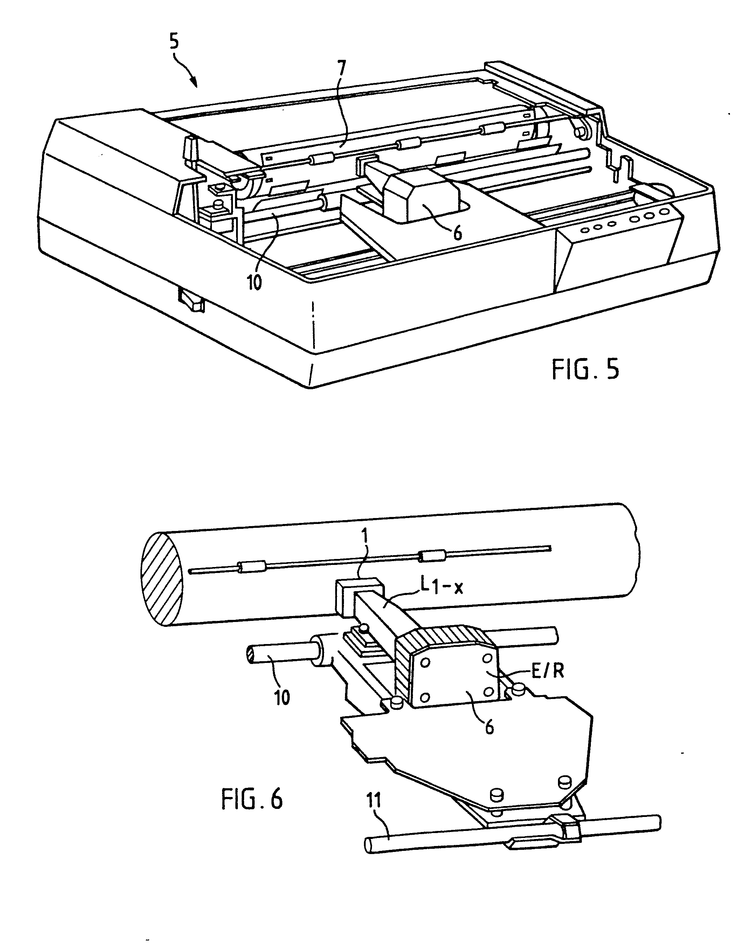

Diese Ausführungsform zeigen die Figuren 2 und 3, bei welchen lediglich die Stirnflächen des Bündels 1 in der Ansicht gezeigt sind. Einer abstrakten Matrixdarstellung wird Vorzug gegeben, da ohnehin jeder Fachmann dieses Gebietes weiss, dass Optikfasern in der Regel keinen quadratischen Querschnitt aufweisen. Mit L1 bis Lx ist die Lichtleitermatrix mit den Lesefasern bezeichnet, dies ist das Rezeptorfeld R; mit E1 bis Ey ist eine andere Lichtleitermatrix mit den Beleuchtungsfasern bezeichnet, dies ist das Emitterfeld E. Licht, das aus dem Emitterfeld auf die Leseunterlage fällt, wird von diesem Material, meist ist es Papier, gestreut. Die Diffusorwirkung trägt einerseits zur Kontrastverbesserung bei und andererseits ist das Lesefeld aktiv beleuchtet. Die Matrix des Emitterfeldes wird noch besser gemäss Figur 3 angeordnet, hier sind es zwei sich kreuzende Diagonalen quer durch die Rezeptormatrix, mit welcher das Lesefeld noch besser ausgeleuchtet wird. Bei dieser Anordnung weist das Rezeptorfeld nun aber "Löcher" auf, hervorgerufen durch eine Art Durchsetzung von nichtrezeptierenden Stellen der Beleuchtungsfasern. Dies ist bis zu einem gewissen Grad unkritisch, soweit durch diese Löcher gemäss Theorie der Abbildungsinformation nicht die gesamte Redundanz ausgeschöpft wird. Um dieses Thema etwas zu streifen, dient Figur 4, in der ein Buchstabe R soweit abgebildet ist, dass er noch klaglos erkannt werden kann, obschon von seiner Darstellung schier die Hälfte zeichnerisch unterdrückt wurde. Es braucht dabei nicht näher darauf eingegangen zu werden, da diese Umstände wohlbekannt sind und die Rekonstruktion nur eine Sache des Softwareaufwandes ist. Es kann aber davon ausgegangen werden, dass die optimale Anzahl der Beleuchtungsfasern erheblich unterhalb der Anzahl liegt, bei der aufwendige rekonstruierende Massnahmen nötig werden. Bei guter Auflösung werden diese Leerstellen gleichsam verwischt, d.h. elektronisch übersehen.

BE20858, U.P.I. INTERNATIONAL INC.


Figur 5 zeigt nun die Leseeinrichtung in einen auf dem Markt erhältlichen Drucker 5 eingebaut. Der Lesekopf 6 sitzt an Stelle des Druckkopfes, er kann an der Führungsstange 6 entlanggleiten und die eingespannte Papiervorlage 7 berührungslos ablesen. Die ganze Steuerung des Druckers eignet sich vorzüglich für die Bewegung des Lesekopfes und des zu lesenden Materials, also Papiereinzug und zeilenweisen Papiertransport. Das flexible Fiberoptik-Bündel liegt in eine Schlaufe unter dem Lesekopf und wird zwangslos mitbewegt, wie dies mit dem Flachbandkabel eines Druckkopfes auch der Fall ist. Zieht man gleichmässige Biegeradien der Optikfibern vor, so können diese ebenfalls als Flachbandkabel ausgestaltet werden.

—

Figur 6 zeigt noch etwas mehr im Detail und in Abwandlung den in eine bestehende Printermechanik eingebauten Lesekopf 6, mit der leseseitigen Stirnfläche 1 der Friktionswalze 7 zugewendet. Die Optikfasern L1-x sind durch ein starres Zwischenstück in das Gehäuse geführt, in welchem die Fasern mit Emittoren und Rezeptoren E/R gekoppelt sind. Von diesem Gehäuse laufen nun nicht die Optikfasern sondern normale metallische Leiter zur Auswerteschaltung auf dem Printerboard. Auf diese Weise sind die optischen Fasern nicht mehr einer ständigen Biegebelastung ausgesetzt. Dies, im Falle einem Fasermaterial mit für diesen Zweck ungenügenden mechanischen Eigenschaften der Vorzug gegeben wird. Der Lesekopf gleitet dann gleich wie ein Druckkopf auf dem printereigenen Schlittengestänge 10 und 12.


Eine hier nicht dargestellte, aber gut verwendbare Zusatzeinrichtung zu einem bestehenden Printer, ist eine Clip-On Version des Lesekopfes als Lesegriffelteil, der auf den Druckkopf aufsteck- oder sonst befestigbar ist. Die Auswerteschaltung befindet sich dann extern vom Drucker. Mit

BE20858, U.P.I. INTERNATIONAL INC.


einem zusätzlichen Hangriff kann der Lesekopf dann als Lesegriffel verwendet werden.


In einer gerafften Uebersicht, können die geschilderten
Ausführungsformen der Erfindung folgendermassen dargestellt
werden. Eine optische Leseeinrichtung zum Lesen von auf
einen Druck- oder Schreibträger aufgebrachten graphischen
Zeichen, kennzeichnet sich dadurch aus, dass eine Mehrzahl
von Lichtleitern zu einem Bündel zusammengefasst ist und das
eine Ende des Bündels leseseitig in eine relative Lesebewegung zu den graphischen Zeichen bringbar ist und das andere
Ende des Bündels mit einem optischen Rezeptor verbunden ist.
Die einzelnen Lichtleiter des Bündels können leseseitig zu
einer Matrix geordnet sein und am anderen Ende des Bündels
einen optischen Rezeptor aufweisen.


In einer weiteren Ausführungsform sind dem Bündel von Lichtleiter-Lesefasern weitere Lichtleiter als Zusatzfasern beigegeben, welche Zusatzfasern am nichtleseseitigen Ende an
optische Emissoren oder Lichtquellen angeschlossen sind.
Diese Lichtquellen sind vorzugsweise Fotodioden oder LED's.
Die Zusatzfasern leiten Licht zum leseseitigen Ende, wobei
diese Zusatzfasern als Beleuchtungsfasern wirken. Im Bündel
einer Vielzahl von Lichtleitern ist ein Teil Lesefasern und
ein Teil Beleuchtungsfasern. Im leseseitig zur Matrix geordneten Bündel von Lichtleitern, sind Lesefasern und Beleuchtungsfasern systematisch angeordnet, das andere Ende des
Bündels ist an zur Matrix in Korrelation stehende optische
Rezeptoren und Emmissoren angeschlossen.


In einer weiteren Ausführungsform der Erfindung ist das
Lichtleiterbündel in einer mechanischen Vorrichtung die im
wesentlichen der eines Druckers entspricht angeordnet. Das

**0158994**

leseseitige Ende des Bündels ist als Lesekopf in einem
Drucker an Stelle des Druckkopfes angeordnet, derart, dass
die Lesematrix in unmittelbarer Nähe über die im Drucker
bzw. Leser eingespannte zu lesende Druckvorlage geführt
wird. Eine weitere Ausführungsform sieht vor, dass das
Lichtleiterbündel als Zusatzvorrichtung in einem Drucker auf
den Druckkopf aufsteckbar ist, und dass es als Lesegriffel
ausgestaltet ist.

BE20858, U.P.I. INTERNATIONAL INC.

P A T E N T A N S P R Ü C H E

1. Optische Leseeinrichtung zum Lesen von auf einen Druck-
oder Schreibträger aufgebrachten graphischen Zeichen, dadurch gekennzeichnet, dass eine Mehrzahl von Lichtleitern
(L1 bis Lx) zu einem Bündel (1) zusammengefasst ist und
das eine Ende des Bündels leseseitig in eine relative
Lesebewegung zu den graphischen Zeichen bringbar ist und
das andere Ende des Bündels mit einem optischen Rezeptor
verbunden ist.

2. Leseeinrichtung nach Anspruch2, dadurch gekennzeichnet,
dass die einzelnen Lichtleiter (L1 bis Lx) des Bündels
(1) leseseitig zu einer Matrix (R,E) geordnet sind und am
anderen Ende des Bündels jeder Lichtleiter einen optischen Rezeptor (R1 bis Rx) aufweist.

3. Leseeinrichtung nach den Ansprüchen 1 und/oder 2, dadurch
gekennzeichnet, dass dem Bündel von Lichtleiter-Lesefasern (L1 bis Lx) weitere Lichtleiter (E1 bis Ey) als
Zusatzfasern beigegeben sind, welche Zusatzfasern am
nichtleseseitigen Ende an optische Emissoren angeschlossen sind.

4. Leseeinrichtung nach Anspruch 3, dadurch gekennzeichnet,
dass durch die Zusatzfasern (E1 bis Ey) Licht zum leseseitigen Ende geleitet wird und diese Zusatzfasern als
Beleuchtungsfasern wirken.

0158994

BE20858, U.P.I. INTERNATIONAL INC.

5. Leseeinrichtung nach einem der Ansprüche 1 bis 4, dadurch gekennzeichnet, dass im Bündel (1) der Vielzahl von Lichtleitern (L1/Lx;E1/Ex) ein Teil Lesefasern (1) und ein Teil Beleuchtungsfasern (E) sind.

6. Leseeinrichtung nach einem der Ansprüche 2 bis 5, dadurch gekennzeichnet, dass im leseseitig zur Matrix geordneten Bündel (1) von Lichtleitern, Lesefasern (L) und Beleuchtungsfasern (E) systematisch angeordnet sind und das andere Ende des Bündels an zur Matrix (E,R) in Korrelation stehende optische Rezeptoren und Emmissoren angeschlossen ist.

7. Leseeinrichtung nach einem der Ansprüche 1 bis 6, dadurch gekennzeichnet, dass das Lichtleiterbündel in einer mechanischen Vorrichtung die im wesentlichen der eines Druckers entspricht angeordnet ist.

8. Leseeinrichtung nach Anspruch 7, dadurch gekennzeichnet, dass das leseseitige Ende des Bündels als Lesekopf (6) in einem Drucker (5) an Stelle des Druckkopfes angeordnet ist, derart, dass die Lesematrix in unmittelbarer Nähe über die im Drucker bzw. Leser eingespannte zu lesende Druckvorlage geführt wird.

9. Leseeinrichtung nach Anspruch 7 oder 8, dadurch gekennzeichnet, dass das Lichtleiterbündel (1) als Zusatzvorrichtung in einem Drucker auf den Druckkopf aufsteckbar ist.

**0158994**

BE20858, U.P.I. INTERNATIONAL INC.

10. Leseeinrichtung, nach einem der Ansprüche 1 bis 9, de- durch gekennzeichnet, dass sie als Lesegriffel ausgestal- tet ist.

0158994

FIG. 1

FIG. 2

FIG. 3

FIG. 4

FIG. 5

FIG. 6

L1-x

E/R